# EUROPEAN PATENT APPLICATION

(11) **EP 1 321 897 A2**
(43) Date of publication of application: **25.06.2003**
(21) Application number: 02021379.9
(22) Date of filing: 24.09.2002
(51) Int. Cl.: G06T 5/00

(54) **Method for extracting object region**

(30) Priority: 08.10.2001 KR 2001061833
(71) Applicant: LG ELECTRONICS INC., Seoul (KR)
(72) Inventor: Lee, Jin Soo, Songpa-gu, Seoul (KR); Lee, Ji Eun, Seocho-gu, Seoul (KR)
(74) Representative: Vetter, Ewald Otto

(57) **Abstract**

The present invention discloses a method for extracting an object region, which can precisely modify a boundary of a roughly extracted object region (reference region). The boundary of the reference region can be modified by detecting edge pixels nearest to the boundary pixel of the reference region. Thereafter, an expanded region is designated from the modified reference region, and a surrounding region having the smallest color difference is selected by using color differences between the expanded region and the surrounding regions. At last, the modified boundary of the reference region is modified by using distribution of interest region included in the selected surrounding region. As a result, the object region can be more precisely extracted by preventing confusion of the boundary by modifying the reference region twice.

## Description

### BACKGROUND OF THE INVENTION

### 1. Field of the Invention

The present invention relates to a method for extracting an object region in a motion picture, and more particularly to an improved method for extracting an object region, which can precisely extract the object region of a current frame by refining a boundary of a presumed object region.

### 2. Background of the Related Art

Recently, techniques for extracting or tracking an object region from an image have been focused and reported as its importance has been increased. Especially, the MPEG-4 for object-based compression and coding is standardized to introduce a variety of object region extracting algorithms. In addition, a method for manually extracting a presumed region and automatically extracting a precise object region has been actively investigated to overcome difficulties of object extraction, achieve practical uses and show a practically applicable object-based application example. The method for extracting the precise object region from the presumed object region is useful for object-based coding in image communication.

On the other hand, a method for automatically detecting a precise boundary of the object region when a presumed object region is given is very useful in the following applications.

### Edition/decoration function of video/images

Recently, a video mail service using a mobile communication terminal or PDA has been generally used. A user can edit an image of a video mail offline. Here, the object region roughly divided by the user is automatically refined and thus easily divided. In general, when the user intends to edit the video mail by generating a variety of decoration screens around his/her face or body region, such a refining algorithm is very useful. The user also can create a composite picture with his/her picture and a star's picture by using the method for extracting the object region.

### Object-based still image information extraction for search

The object-based search must be done to obtain high performance in a search field such as image search. That is, when the interest-region based search is done for the whole images, instead of similarity search, the search performance is improved. However, it is not easy to divide the meaningful object region from the still image. In order to overcome the foregoing problem, a method for semi-automatically dividing an object region has been generally used. When the user roughly marks an interest region, the object region is automatically precisely extracted.

### Data extraction for hot spot

According to the development of a digital TV and an interactive TV, a lot of attentions have been paid on a hot spot technique for providing information on a specific product to a user when the user points out the product in watching the TV. In order to provide the hot spot function, the object region must be divided in advance. However, the modem technology cannot wholly automatically divide the object region. Instead, a variety of methods for enabling a contents provider to easily semi-automatically extract the object region have been actively investigated.

### Automatic object extracting algorithm from motion pictures

As described above, this algorithm is used to wholly automatically extract the object region. Here, a refining process refines an object region roughly extracted on the basis of motion into a real precise boundary region, and thus is useful for applications including background switching.

On the other hand, various researches have been done on the general method for extracting the object region. The representative methods will now be explained. In general, a method for extracting an object region or interest region is performed on an image obtained by a still camera or an image obtained by a moving camera. It is more difficult to extract the interest region from the image obtained by the moving camera than the image obtained by the still camera. Therefore, most of the existing researches have been done on the image obtained by the still camera.

The object region is divided from the image obtained by the still camera by extracting a moving region. However, in the image obtained by the camera, motions could be found in the still background as well as the moving object due to noise, or a distorted object region could be obtained due to a shadow of an object boundary region. It is thus difficult to extract the precise object region merely by using motion information. Accordingly, regions are divided by colors or textures. The divided regions form groups on the basis of the motion information and color similarity, and re-compose one object region. But it requires a long processing time.

In addition, the method for extracting the object region from the motion picture generally includes a step for extracting an initial object region, and an object region tracking step for predicting an object region of a succeeding frame from the extracted object region. To extract the object region at an early stage without any information is quite difficult, and thus often uses complicated algorithms. However, when such a complicated algorithm is used for each frame, the real time process is not achieved. As a result, the initial object region is extracted by using the precise but complicated algorithm, and a modified object region is generated from the extracted region in a next frame by using a simple prediction method, thereby predicting the object region of the next frame.

Here, the initial object region can be extracted according to semi-automatic extraction with the help of the user, or in a specific condition, for example when many motions exist. When the object region of the next frame is extracted on the basis of the extracted region, the motion information or color information is employed for the real time process.

As described above, the refining process for modifying a given object region into a precise object region is mixed with the manual region extracting method, and very useful in an automatic object region extraction field. When the motion information is used, the object region is not precisely extracted due to a shadow of the boundary or an afterimage by the motion. Thus, the refining process for precisely modifying the roughly extracted object region is required. When the motion is slow, the object region of the previous frame and the object region of the current frame have a small difference. Accordingly, the object region of the previous frame is modified through the refining process at an early stage, thereby tracking the object region of the current frame.

The refining process is mostly performed by using the color information. For example, when a region having the same color is not identical to a boundary region of a given object, it can be modified with a boundary of the region having the same color. Here, color difference between a boundary pixel of a basically supplied object region (abbreviated as 'reference region') and an adjacent pixel is calculated. When the color difference between the two pixels is smaller than a threshold value and a distance between the adjacent pixel and the boundary pixel of the current interest region is smaller than a threshold value, the pixel is included in the current object region. If not, the pixel is not included in the current object region.

This method is very efficient when the boundary of the reference region is approximate to the boundary of the real object region. However, as described above, the reference region is obtained merely by using the motion information or uses the object region of the previous frame. Therefore, the reference region is approximate to the boundary of the real object region only when the object rarely moves.

Moreover, when the object has few motions, the object region of the previous frame is extremely similar to the current region without requiring the refining process. In addition, in the case that the reference region is far from the boundary of the real object region, the aforementioned algorithm may generate an imprecise boundary.

The boundary of the object region distorted during the tracking process can be modified according to the algorithm. However, when the object region rapidly moves, an imprecise boundary may be obtained. In this case, the imprecise boundary is modified. As discussed earlier, the existing methods fail to expand the region to the wanted boundary due to noise of the image, or mistakenly expand the region to the non-object region.

### SUMMARY OF THE INVENTION

An object of the invention is to solve at least the above problems and/or disadvantages and to provide at least the advantages described hereinafter.

Accordingly, one object of the present invention is to solve the foregoing problems by providing a method for extracting a precise object region by refining a boundary of a roughly extracted reference region.

Another object of the present invention is to provide a method for extracting an object region, which can overcome confusion of a region boundary and perform a real time process.

These and other objects and advantages of the invention are achieved by providing a method for extracting an object region which includes: modifying a boundary of a reference region by using a color difference between a boundary pixel of the reference region extracted from a previous frame and edge pixels; and determining whether to include an expanded region expanded within a predetermined range from the modified boundary pixel of the reference region to the modified reference region.

According to the method for extracting the object region, the step for modifying the boundary of the reference region includes: defining edge pixels having a color difference from the boundary pixel of the reference region over a first threshold value by moving by one pixel in surrounding four directions from the boundary pixel; and modifying a state of adjacent pixels existing between the boundary pixel and the edge pixels when a color difference between the adjacent pixels and the boundary pixel is below a second threshold value.

According to the method for extracting the object region, the step for determining whether to add the expanded region to the modified reference region includes: designating the expanded region including pixels having a color difference from the modified boundary pixel of the reference region below a third threshold value; selecting a surrounding region having the smallest average color difference by using the average color differences between the expanded region and surrounding regions; and modifying the modified boundary of the reference region by including the expanded region in the reference region if the selected surrounding region is in the reference region or by excluding the expanded region from the reference region if the selected surrounding region is out of the reference region.

According to another aspect of the invention, a method for extracting an object region includes: modifying a boundary of a reference region by using an edge pixel most approximate to a boundary pixel of the reference region; and expanding the region within a predetermined range from the modified boundary pixel of the reference region, comparing the region with surrounding regions in color similarity, and modifying the modified boundary of the reference region.

According to the method for extracting the object region, the step for modifying the boundary of the reference region includes: determining a pixel having a color difference from the boundary pixel of the reference region over a first threshold value as an edge pixel, when it firstly appears among the pixels existing around the boundary pixel; and detecting a pixel having a color difference from the boundary pixel of the reference region below a second threshold value among the pixels existing on a straight line between the boundary pixel and the edge pixel, and determining whether to add the pixel to a interest region.

According to the method for extracting the object region, the step for modifying the modified boundary of the reference region includes: designating pixels having a color difference from the modified boundary pixel of the reference region below a third threshold value as one group among the pixels existing within a predetermined range from the boundary pixel, and expanding the region; detecting a surrounding region having an average color value most approximate to an average color value of the expanded region; and determining whether to add the surrounding region to the interest region.

The predetermined range may form a square covering N pixels from the boundary pixel of the reference region.

According to further another aspect of the invention, a method for extracting an object region includes: modifying a boundary of a reference region by using a color difference between a boundary pixel of the reference region and edge pixels; expanding the region within a predetermined range from the modified boundary pixel of the reference region; and detecting a surrounding region most approximate to the expanded region in color similarity, and modifying the modified boundary of the reference region.

The edge pixels are pixels having a color difference from the boundary pixel of the reference region over a first threshold value among the pixels approximate to the boundary pixel.

In addition, whether pixels having a color difference from the boundary pixel of the reference region below a second threshold value are added to an interest region is determined among the pixels existing on a straight line between the boundary pixel of the reference region and the edge pixels.

The step for modifying the modified boundary of the reference region is performed by using distribution of the interest region included in the most adjacent surrounding region.

According to still another aspect of the invention, a method for extracting an object region includes: extracting a reference region according to motion information of a previous frame; modifying a boundary of the reference region by using a color difference between a boundary pixel of the reference region and edge pixels; expanding the region within a predetermined range from the modified boundary pixel of the reference region; designating surrounding regions in four directions from the expanded region; selecting the surrounding region having the smallest average color difference by using average color differences between the expanded region and the surrounding regions; and modifying the modified boundary of the reference region by including the expanded region in the reference region if the selected surrounding region is in the reference region or by excluding the expanded region from the reference region if the selected surrounding region is out of the reference region.

The step for modifying the boundary of the reference region is performed on pixels having a color difference from the boundary pixel of the reference region below a second threshold value among the pixels existing on a straight line between the boundary pixel of the reference region and the edge pixels.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

### BRIEF DESCRIPTION OF THE DRAWINGS

The invention will be described in detail with reference to the following drawings in which like reference numerals refer to like elements wherein:

Fig. 1 is a flowchart showing a process for extracting an object region in accordance with the present invention;

Fig. 2 is a flowchart showing a process for modifying a boundary of a reference region by using an edge pixel most approximate to the boundary pixel in accordance with the present invention;

Fig. 3 is a concept view illustrating the process for modifying the boundary of the reference region in accordance with the present invention;

Fig. 4 is an exemplary view when the boundary of the reference region is modified by using the edge pixels from the reference region in accordance with the present invention;

Fig. 5 is a flowchart showing a process for re-modifying the modified reference region by using color similarity between an expanded region and surrounding regions in accordance with the present invention;

Fig. 6 is an exemplary view when the reference region is modified by using color similarity on the basis of the reference region in accordance with the present invention; and

Fig. 7 is an exemplary view when the boundary is modified on the basis of the reference region and re-modified on the basis of the modified reference region by using color similarity in accordance with the present invention.

### DETAILED DESCRIPTION OF PREFERRED EMBODIMENTS

The following detailed description will present a method for extracting an object region according to a preferred embodiment of the invention in reference to the accompanying drawings.

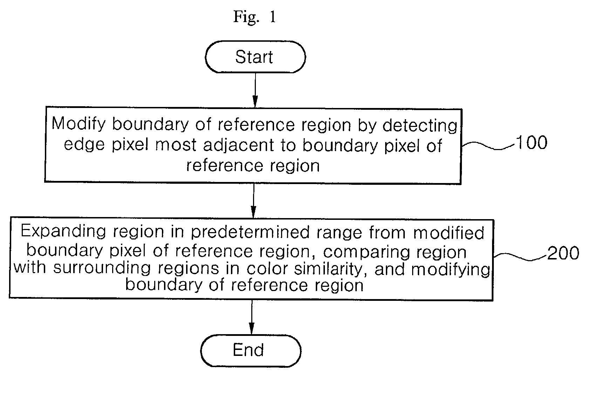

Fig. 1 is a flowchart showing a process for extracting the object region in accordance with the present invention. Referring to Fig. 1, the method for extracting the object region includes a process (step 100) for detecting an edge pixel most approximate to a boundary pixel of a reference region, and modifying a boundary of the reference region, and a process (step 200) for expanding the region within a predetermined range from the modified boundary pixel of the reference region, comparing the region with surrounding regions in color similarity, and modifying the modified boundary of the reference region.

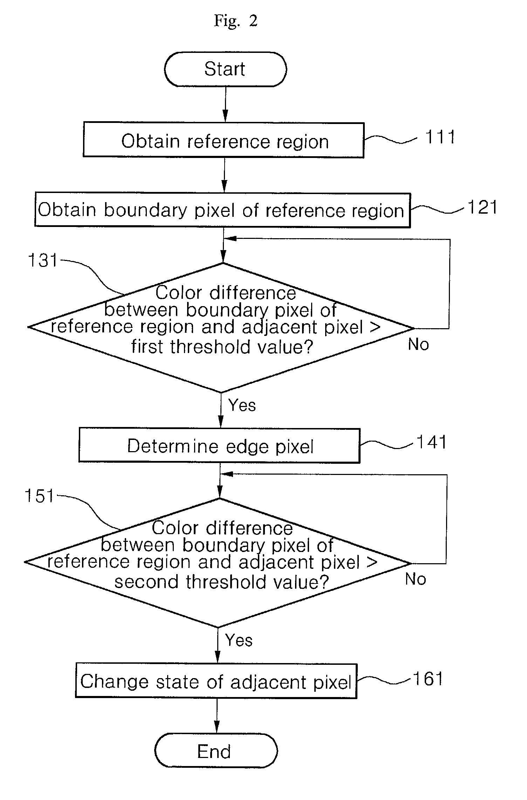

Step 100 of the method for extracting the object region will now be described in detail with reference to Fig. 2.

Fig. 2 is a flowchart showing the process for modifying the boundary of the reference region by using the edge pixel most approximate to the boundary pixel in accordance with the present invention. As illustrated in Fig. 2, an object region is obtained from a previous frame according to motion information (step 111). Hereinafter, the object region is referred as a reference region. The reference region represents an image where an interest region is indicated by in(1) and the other region, namely a non-interest region is indicated by out(0) in each pixel. Here, the interest region or non-interest denotes a region of each pixel indicated by in(1) or out(0). The reference region can be extracted according to the existing method for extracting the object region.

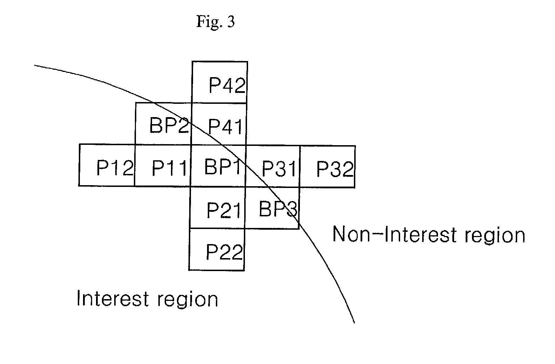

A boundary pixel corresponding to the edge of the interest region is obtained by using in (1) indicated as the interest region in the reference region (step 121) (Fig. 3). The boundary pixel can be obtained by designating the interest region positioned at a distinguishing portion between the interest region indicated by in(1) and the non-interest region indicated by out(0) in each direction of the reference region.

Whether a color difference between the boundary pixel of the reference region and an adjacent pixel is over a first threshold value Th1 is judged (step 131). Here, the color difference implies a difference of color values for each pixel. Concretely, the color difference shows a difference between the color value of the boundary pixel of the reference region and the color value of the adjacent pixel. The adjacent pixels are pixels existing around the boundary pixel of the reference region, namely in four directions.

As a judgment result, when the color difference between the adjacent pixel and the boundary pixel of the reference region is over the first threshold value Th1, the adjacent pixel is determined as an edge pixel (step 141).

The pixels having a color difference from the boundary pixel of the reference region over the first threshold value Th1 are determined as edge pixels by moving by one pixel in surrounding four directions from the boundary pixel. Accordingly, one or plural adjacent pixels may exist between the edge pixel and the boundary pixel in each direction.

The important thing is to determine the edge pixels nearest to the boundary pixel of the reference region in each direction.

When the edge pixels are determined, whether a color difference between the adjacent pixel and the boundary pixel of the reference region is below a second threshold value Th2 is judged among the adjacent pixels existing on a straight line between the boundary pixel of the reference region and the edge pixel (step 151).

As a judgment result, when the adjacent pixel has the color difference from the boundary pixel below the second threshold value Th2, a state of the corresponding adjacent pixel is modified (step 161). That is, when the adjacent pixel is indicated by in (1) showing the interest region, it is indicated by out(0) showing the non-interest region. Conversely, when the adjacent pixel is indicated by out (0) showing the non-interest region, it is indicated by in(1) showing the interest region.

When the current interest region is mistakenly indicated, the boundary of the reference region may be caved or protruded from the real object region. In order to prevent this problem, step 161 modifies the state of the corresponding adjacent pixel, and precisely distinguishes the boundary.

Preferably, the second threshold value Th2 is smaller than the first threshold value Th1.

The process for modifying the boundary of the reference region will now be . explained with reference to Fig. 3. Fig. 3 is a concept view illustrating the process for modifying the boundary of the reference region, especially a process for processing one boundary pixel among a plurality of boundary pixels in accordance with the present invention. As depicted in Fig. 3, the reference region is divided into the interest region indicated by in (1) and the non-interest region indicated by out (0). A boundary line exists between the interest region and the non-interest region. Boundary pixels exist along the boundary line.

In step 131, the pixel having a color difference from the boundary pixel BP1 over the first threshold value Th1, namely the edge pixel is obtained by moving in the surrounding four directions from one boundary pixel BP1 by one pixel (P11, P21, P31 and P41 are all adjacent pixels). Here, when the boundary pixel is compared with the adjacent pixels P11, P21, P31 and P41 by using the color difference, if the pixel having the color difference from the boundary pixel BP1 over the first threshold value Th1 does not exist, the color difference from the boundary pixel BP1 is obtained by further moving in the four directions by one pixel (P12, P22, P32 and P42).

It is presumed that the color difference between the adjacent pixel P32 and the boundary pixel BP1 is over the first threshold value Th1. Step 151 firstly obtains a color difference between the boundary pixel BP1 and the adjacent pixels P31 and P32 existing between the boundary pixel BP1 and the adjacent pixel P32. When the color difference between the adjacent pixel P31 and the boundary pixel BP1 is below the second threshold value Th2, the state of the adjacent pixel P31 is transformed from out (0) to in(1), thereby performing the refining process on the interest region.

The boundary of the reference region has been modified through the aforementioned process. In the case that the boundary of the region, which is a reference region of the boundary pixel is similar to the boundary of the real object region, an error is rarely generated. However, when it is quite far from the boundary of the real object region, the most adjacent boundary pixel may not be the boundary pixel of the real object region but another background edge. Accordingly, the modified result expands the region in a wrong direction or fails to expand the region outwardly

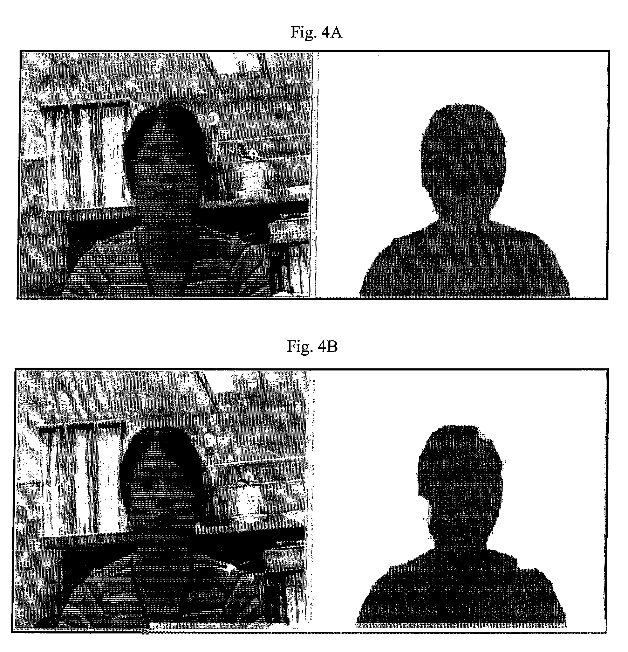

The motion pictures have a lot of edges. When the reference region is very different from the interest region, the algorithm using pixel unit color differences may change the reference region into the boundary pixel most approximate to the reference region. The exemplary result is shown in Fig. 4. Fig. 4 is an exemplary view when the boundary of the reference region is modified by using the edge pixels in accordance with the present invention. Fig. 4A shows a state where the reference region is similar to the real interest region, and Fig. 4B shows a state where the reference region is mistakenly determined.

In order to solve the foregoing problems, the process for expanding the region within a predetermined range from the modified reference region, comparing the expanded region with surrounding regions in color similarity, and modifying the modified boundary of the reference region can be performed as in step 200 of Fig. 1.

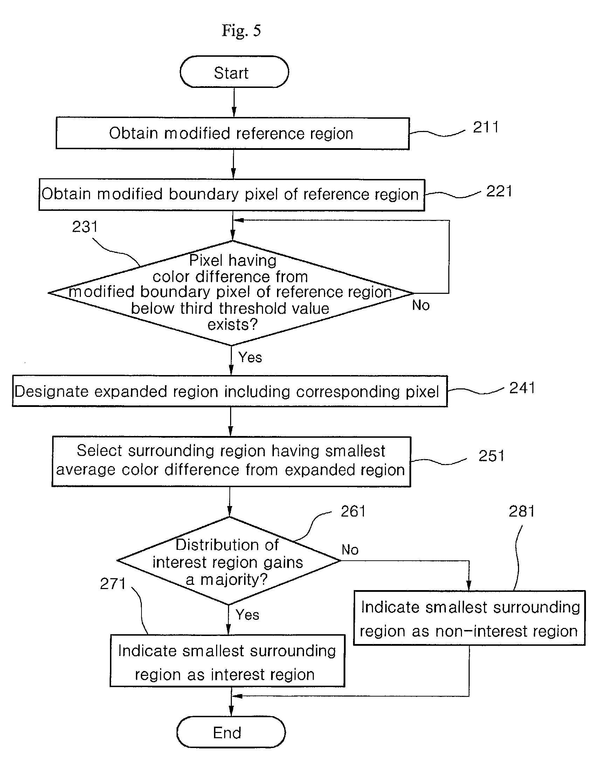

Fig. 5 is a flowchart showing a process for re-modifying the modified reference region by using color similarity between the expanded region and the surrounding regions in accordance with the present invention. Referring to Fig. 5, a modified reference region is obtained, and then a boundary pixel is obtained from the modified reference region (steps 211 and 221).

Whether a pixel having a color difference from the boundary pixel obtained in step 221 below a third threshold value Th3 exists is judged (step 231).

As a judgment result, when the pixel having the color difference from the boundary pixel below the third threshold value Th3 exists, an expanded region of a predetermined range including the corresponding pixel is designated (step 241). Preferably, the predetermined range may comprise square-shaped pixels forming a square within distance N from the boundary pixel. Here, the predetermined range is controllable, for example a vertical/horizontal distance of 30 pixels from the boundary pixel in the present invention. Therefore, the pixels included in the vertical/horizontal distance of 30 pixels can be designated as one expanded region.

An adjacent region having the smallest average color difference from the expanded region is selected (step 251).

That is, when the expanded region is designated, the surrounding regions forming a square as large as the expanded region in the four directions are designated. Here, four surrounding regions can be designated for one expanded region. Thereafter, average color values for each region are calculated by using color values included in the expanded region and the surrounding regions. Accordingly, the surrounding region having the smallest average color difference is selected by using the average color differences showing the differences between the average color value of the expanded region and the average color values of the surrounding regions.

As described above, the modified boundary of the reference region is modified by including the expended region into the reference region (step 271) if the selected surrounding region is in the reference region(step 261), or by excepting the expended region from the reference region (step 281) if the selected surrounding region is out of the reference region (step 261).

The method for modifying the boundary of the reference region through the expanded region as shown in Fig. 5 can modify the boundary of the reference region on the basis of the reference region extracted from the previous frame, without using the reference region modified in step 100. That is, the boundary of the reference region can be modified through step 200 by omitting step 100 of Fig. 1 and using the existing reference region.

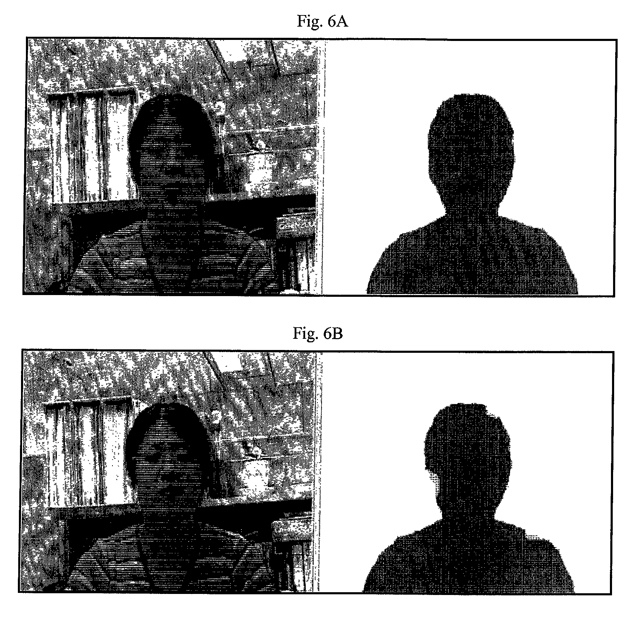

However, when the boundary of the reference region is modified only through step 200 of Fig. 1, the region should be expanded by using the pixels having a small color difference. In the case that a color difference is generated due to brightness even in the same region, it is impossible to sufficiently expand the region. In addition, when the region is expanded with a great color difference, the boundary of the region may exceed the reference region. The exemplary result is shown in Fig. 6.

Fig. 6 is an exemplary view when the reference region is modified by using color similarity on the basis of the reference region in accordance with the present invention. Fig. 6A shows a state where the reference region is similar to the real interest region, and Fig. 6B shows a state where the reference region is mistakenly selected.

On the other hand, in accordance with the preferred embodiment of the present invention, when the boundary is modified on the basis of the reference region and then re-modified on the basis of the modified reference region by using color similarity, the aforementioned problem can be fully overcome.

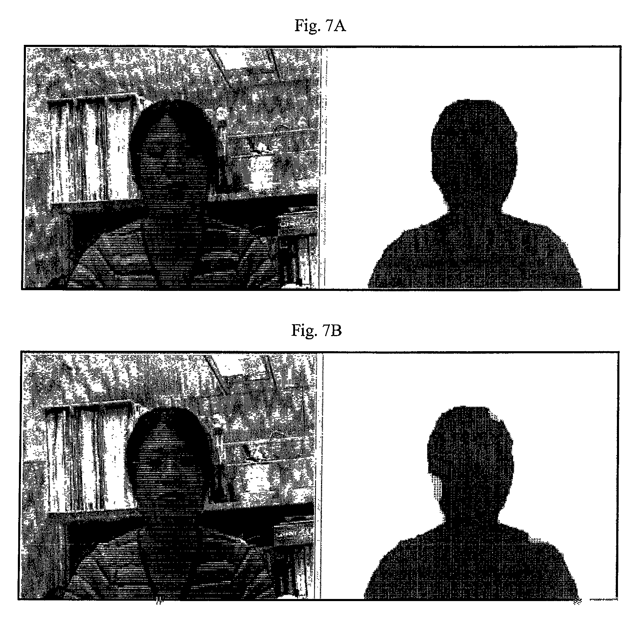

Fig. 7 is an exemplary view when the boundary is modified on the basis of the reference region and re-modified on the basis of the modified reference region by using color similarity in accordance with the present invention. Fig. 7A shows a state where the reference region is similar to the real interest region, and Fig. 7B shows a state where the reference region is mistakenly selected.

Although the regions have the same color information, the two threshold values Th1 and Th2 used in step 100 and the threshold value Th3 used in step 200 have different roles, and the pixels filtered through the three threshold values are appropriately used, so that the complete boundary can be extracted through the two steps 100 and 200 for modifying the boundary of the reference region twice on the basis of colors. Preferably, the threshold values of the invention satisfy 'Th1 >Th2 >Th3'.

As set forth above, in accordance with the present invention, the object region can be precisely extracted by modifying the boundary of the roughly-extracted reference region by using color differences twice.

Moreover, the confusion of the boundary of the object region generated due to a complicated background or noise can be overcome by refining the boundary of the reference region, and thus a rapid real time process can be performed.

The present invention having the aforementioned advantages is useful for a video edition tool for the object-based image coding and video mail, a search information extraction tool for object-based search data, and a hot spot TV program image data tool.

While the invention has been shown and described with reference to a certain preferred embodiment thereof, it will be understood by those skilled in the art that various changes in form and details may be made therein without departing from the spirit and scope of the invention as defined by the appended claims.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art.

## Claims

1. A method for extracting an object region, comprising:
modifying a boundary of a reference region by using a color difference between a boundary pixel of the reference region extracted from a previous frame and edge pixels; and
determining whether to include an expanded region expanded within a predetermined range from the modified boundary pixel of the reference region as the reference region.

2. The method according to claim 1, wherein the step for modifying the boundary of the reference region comprises:
defining edge pixels having a color difference from the boundary pixel of the reference region over a first threshold value by moving by one pixel in surrounding four directions from the boundary pixel; and
modifying a state of adjacent pixels existing between the boundary pixel and the edge pixels when a color difference between the adjacent pixels and the boundary pixel is below a second threshold value.

3. The method according to claim 2, wherein the second threshold value is smaller than the first threshold value.

4. The method according to claim 2 or 3, wherein the state of the adjacent pixels is transformed from an interest region to a non-interest region, or the non-interest region to the interest region.

5. The method according to at least one of the preceding claims, wherein the step for determining whether to add the expanded region to the modified reference region comprises:
designating the expanded region including pixels having a color difference from the modified boundary pixel of the reference region below a third threshold value;
selecting a surrounding region having the smallest average color difference by using the average color differences between the expanded region and surrounding regions; and
modifying the modified boundary of the reference region by including the expanded region in the reference region if the selected surrounding region is in the reference region or by excluding the expanded region from the reference region if the selected surrounding region is out of the reference region

6. The method according to at least one of the preceding claims, wherein the predetermined range comprises square-shaped pixels forming a square, which are in the distance N from the boundary of a reference region

7. The method according to claim 5 or 6, wherein, when the distribution of the interest region of the selected surrounding region gains a majority, the selected surrounding region is indicated as the interest region, and when the distribution of the interest region fails to gain a majority, the selected surrounding region is indicated as the non-interest region.

8. The method according to at least one of claims 5 to 7, wherein the third threshold value is smaller than the second threshold value.

9. A method for extracting an object region, comprising:
modifying a boundary of a reference region by using a color difference between a boundary pixel of the reference region and edge pixels;
expanding the region within a predetermined range from the modified boundary pixel of the reference region; and
detecting a surrounding region nearest to the expanded region in color similarity, and modifying the modified boundary of the reference region.

10. The method according to claim 9, wherein the edge pixels are pixels having a color difference from the boundary pixel of the reference region over a first threshold value among the pixels approximate to the boundary pixel.

11. The method according to claim 9 or 10, wherein whether pixels having a color difference from the boundary pixel of the reference region below a second threshold value are added to an interest region is determined among the pixels existing on a straight line between the boundary pixel of the reference region and the edge pixels.

12. The method according to at least one of claims 9 to 11, wherein the expanded region comprises pixels having a color difference from the boundary pixel below a third threshold value.

13. The method according to at least one of claims 9 to 12, wherein the step for modifying the modified boundary of the reference region is performed by using distribution of the interest region included in the most adjacent surrounding region.

14. A method for extracting an object region, comprising:
extracting a reference region according to motion information of a previous frame;
modifying a boundary of the reference region by using a color difference between a boundary pixel of the reference region and edge pixels;
expanding the region within a predetermined range from the modified boundary pixel of the reference region;
designating surrounding regions in four directions from the expanded region;
selecting the surrounding region having the smallest average color difference by using average color differences between the expanded region and the surrounding regions; and modifying the modified boundary of the reference region by including the expanded region in the reference region if the selected surrounding region is in the reference region or by excluding the expanded region from the reference region if the selected surrounding region is out of the reference region

15. The method according to claim 14, wherein the step for modifying the boundary of the reference region is performed on pixels having a color difference from the boundary pixel of the reference region below a second threshold value among the pixels existing on a straight line between the boundary pixel of the reference region and the edge pixels.
